# EUROPEAN PATENT APPLICATION

(11) **EP 2 913 171 A1**
(43) Date of publication of application: **02.09.2015**
(21) Application number: 15157122.1
(22) Date of filing: 02.03.2015
(51) Int. Cl.: B29C 45/14, B29D 99/00, B29D 35/00, A43B 5/04, A42B 3/04

(54) **Method for manufacturing a sport item and sport item manufactured thereby**

(30) Priority: 28.02.2014 IT TO20140168
(71) Applicant: Tecnica Group S.p.A., 31040 Giavera del Montello (TV) (IT)
(72) Inventor: Zampiero, Claudio, 31040 Giavera del Montello (TV) (IT)
(74) Representative: Robba, Pierpaolo

(57) **Abstract**

The present invention relates to a method for manufacturing a sport item, and particularly a sport item of the kind comprising a substantially rigid outer element obtainable by injection moulding, as well as to a sport item thus obtained. The method according to the invention provides for providing a decoration layer as a sheet or film, placing said decoration layer into a mould, injection moulding a thermoplastic material into said mould in order to obtain said substantially rigid outer element of said sport item. The method according to the invention allows to obtain a wide range of desired aesthetic effects and avoids the need for additional decoration steps after the injection moulding step, thus drastically limiting the overall times, costs and energy consumptions of the manufacturing process.

## Description

### Technical Field

The present invention refers to a method for manufacturing a sport item, and particularly a sport item of the kind comprising a substantially rigid outer element obtainable by injection moulding.

Sport items of this kind comprise, for instance, ski boots, safety helmets and the like.

The present invention further relates to a sport item, in particular of the kind comprising a substantially rigid outer element obtainable by injection moulding, manufactured by the aforesaid method.

### Prior Art

There are several sport items which, in order to meet the need of providing proper comfort to the user while ensuring the required strength, comprise a substantially rigid outer element and a substantially soft inner element.

For example, ski boots usually comprise a substantially rigid outer shell housing a substantially soft inner liner.

Similarly, safety helmets for sports practice comprise a substantially rigid outer shell in which a substantially soft padding is inserted.

In such sport items the substantially rigid outer element is usually made of a plastic material - in particular of a thermoplastic material - and is obtained by injection moulding.

It is clear that, besides performance in terms of comfort and strength, aesthetic appearance is also of relevance in determining the commercial success of a sport item.

Several techniques have therefore been developed in order to provide said sport items - and specifically their substantially rigid outer element - with special aesthetic features and/or decorations.

The simplest technique provides for adding by mixing a dye to the thermoplastic material before injection moulding.

It is evident that such technique allows only to manufacture an element with a single uniform color.

An alternative technique consists in injecting two materials with different colors by means of double-moulding or over-moulding of a material with a second color after a material with a first color is applied.

However, also this technique involves limited degrees of freedom with respect to the aesthetic results obtainable thereby and furthermore it is expensive.

More complex techniques provide for applying further decorations to the injection-moulded plastic element by applying a varnish to specific areas. Such application can be effected for instance by means of screen printing or pad printing.

However, these techniques, too, have a number of drawbacks.

First of all, the application of decorations is a separate step that follows the manufacturing of the outer element of the sport item and therefore brings about an increase in the complexity of the manufacturing process and, in the end, to an increase in manufacturing times and costs.

In particular, the decoration step involves additional energy consumption, which adds to the energy consumption necessary for the making of the undecorated element.

Secondly, the decorations obtained by means of these processes are not very resistant to abrasions and shocks, which constitutes a very penalizing constraint in view of applications in the sports field.

Also in case of decorations made on adhesive supports and stuck to the outer surface of the outer element of the sport item, the deterioration of the decoration because of abrasions and shocks constitutes a very serious disadvantage.

In this respect, further techniques have been developed that provide for inserting the decorations between the outer element of the sport item and a further transparent or translucent covering element having a high abrasion resistance.

According to a first manufacturing technique, the decoration can be provided on a separate support inserted between the outer element of the sport item and said covering element.

In this connection reference is made for instance to the documents US 2005/0104250 and US 2007/0101619.

As an alternative, according to a different manufacturing technique the decoration can be directly made or transferred, for example by sublimation, onto the inner surface of said transparent or translucent covering element.

In this connection reference is made for instance to the documents US 2004/0103652 and EP 1 671 775.

While allowing to protect decorations from abrasions and scratches on one hand, on the other hand these techniques anyway involve complex manufacturing processes with a high number of steps and components concerned, with consequent high manufacturing costs and long manufacturing times.

It is also to be noted that, for instance in the case of outer shells for ski boots, the manufacturing process is further complicated by the fact that it is necessary to decorate elements having a complex tridimensional geometry.

Furthermore, the above-described solutions limit the choice of the materials usable for the making of the covering elements to transparent or translucent materials, which is a penalizing restriction.

In addition, such materials are subject to quality deterioration (for instance a yellowing effect) over time and due to wear, which brings about a corresponding deterioration of the aesthetic appearance.

The object of the present invention is to overcome the drawbacks described above by providing a method for manufacturing a sport item that enables to obtain the desired aesthetic appearance while being simple and inexpensive.

In particular, the object of the present invention is to reduce to the minimum the number of steps of the aforesaid method so as to consequently reduce to the minimum the energy consumption related to said method.

Another object of the invention is to provide a method for manufacturing a sport item in which the decoration is resistant to abrasions, scratches and shocks.

These and other objects are achieved with the method for manufacturing a sport item and a corresponding sport item as claimed in the appended claims.

### Summary of the Invention

The method according to the invention substantially comprises the following steps:
- providing a decoration layer, wherein said decoration layer is made as a sheet or film and carries a desired pattern or design on one of its faces;
- placing said decoration layer into a mould, in direct contact with the inner surface of the mould, the face carrying the decoration being oriented towards the mould;
- keeping said decoration layer in the desired position in said mould;
- injection moulding said thermoplastic material into said mould.

From what has been said above it is clear that the method according to the invention is extremely simple and inexpensive.

In particular, said method makes it possible to obtain variously decorated sport items without the need for additional steps after the injection moulding step, as the decoration layer is placed directly into the mould for the making of the outer element of the sport item.

More particularly, said method does not require additional energy consumption related to the application of the decoration, whereby the total energy consumption for the making of the sport item (especially of the substantially rigid outer element of said sport item) can be kept within very limited boundaries.

According to the invention, the decoration layer is made of a material having a high resistance to abrasions and scratches.

In particular, said decoration layer is made with a resistance to abrasions and scratches higher than that of the subsequently injected thermoplastic material.

In this way use of transparent or translucent covering elements can be avoided, thus limiting the number of components that are used. Moreover it will be possible to use opaque materials for the making of the decoration layer, thus eliminating a limitation to which known solutions are subject.

Due to the fact that said decoration layer is made as a sheet or film, the overall amount of material used in the method according to the invention is in any case very limited, which allows to use valuable materials without incurring excessive costs.

Depending on the specific applications and requirements, the decoration layer may be used for entirely covering the mould - and therefore for entirely covering the outer element of the sport item once finished - or for covering only parts of the mould - and therefore for covering only parts of the outer element of the sport item once finished.

Advantageously, in the event where the decoration layer entirely covers the outer element of the sport item, or in any case in the event where said decoration layer covers those parts of said outer element which, in use, are more subject to scratches and abrasions, the method according to the invention allows to use, for the making of said outer element, a material having a poor resistance to abrasions and scratches.

Indeed, scratches and abrasions will affect only the outermost decoration layer, which is chosen so as to have a high resistance. This will allow to make the outer element of the sport item by using a material more inexpensive with respect to commonly used materials; consequently, though using valuable materials for the making of the decoration layer, the overall manufacturing costs for the outer element of the sport article will be contained.

It is obvious to the person skilled in art that the fact that the decoration layer is made as a sheet or film ensures high flexibility, thus allowing said decoration layer to easily and accurately adapt also to moulds with complex geometries (comprising for instance undercuts), such as moulds used for the making of outer shells of ski boots.

Moreover, thanks to the fact that the decoration layer is made as a sheet or film, by adequately choosing the material of which said decoration layer is made, it is possible to make complex decorations by using means and techniques for printing on paper or other supports in the form of sheets, including computerized means and techniques for graphics or photography. This increases the freedom of choice of obtainable aesthetic effects.

The fact that the decoration layer is made as a sheet or film also makes it simpler to steadily hold said layer in its correct position during the injection moulding step. It is in fact sufficient to apply a vacuum, even a little one, for letting said decoration layer adhere correctly to the inner wall of the mould.

Any material that can be manufactured in the form of sheets or films, can be used with good results for reproducing a pattern or a desired image and has a high resistance to scratches and abrasions can be used for the making of the decoration layer of the method according to the invention. In case, the material used for said decoration layer can be chosen also depending on the material used for the making of the outer element of the sport item, so as to guarantee full compatibility between materials and satisfactory performances in terms of cohesion between said materials upon injection moulding.

A non-limiting list of materials that can be used for the making of said outer element of said sport item comprises nylon, polyurethanes and polyolefins.

Correspondingly, a non-limiting list of materials that can be used for the making of said decoration layer comprises nylon, polyurethanes and polyolefins. It is in fact preferable that there is compatibility from the chemical viewpoint between the material used for the outer element of the sport item and the material used for the decoration layer.

It is evident from the above description that the method according to the invention allows to fully attain the objects set forth above.

It is further evident that what has been said above has been provided as a non-limiting explanation and that several applications of the invention are possible.

In particular, even if the invention advantageously finds application in the making of outer shells of ski boots, it is not limited to these, but it can be employed in the making of any sport items of the kind comprising a substantially rigid outer element obtainable by means of injection moulding.

## Claims

1. Method for manufacturing a sport item, of the kind comprising at least a substantially rigid outer element made of a thermoplastic material, **characterized in that** it comprises the following steps:
- providing a decoration layer, wherein said decoration layer is made as a sheet or film and carries a desired decoration on one of its faces;
- placing said decoration layer into a mould, in direct contact with the inner surface of said mould, the face carrying the decoration being oriented towards the inner wall of said mould;
- keeping said decoration layer in the desired position in said mould;
- injection moulding said thermoplastic material into said mould, wherein said decoration layer is made of a material having a high resistance to scratches and abrasions.

2. Method according to claim 1, wherein said decoration layer is made of a material having a resistance to scratches and abrasions higher than that of said thermoplastic material.

3. Method according to claim 1 or 2, wherein said decoration layer is made of an opaque material.

4. Method according to any of the preceding claims, wherein said decoration layer has high flexibility so as to adapt to moulds having an inner surface with complex geometries.

5. Method according to any of the preceding claims, wherein said decoration on said decoration layer is obtained by means and techniques for printing on paper, including computerized means and techniques for graphics and photography.

6. Method according to any of the claims 1 to 5, wherein said decoration layer covers the whole inner wall of said mould.

7. Method according to any of the claims 1 to 5, wherein said decoration layer covers only a portion of said inner wall of said mould.

8. Method according to claim 6 or 7, wherein said thermoplastic material is a material having a poor resistance to scratches and abrasions.

9. Method according to claim 1, wherein said decoration layer is kept in the desired position in said mould by applying vacuum.

10. Method according to any of the preceding claims, wherein said thermoplastic material is selected from the group comprising nylon, polyurethanes and polyolefins and wherein said decoration layer is correspondingly made of a material selected from the group comprising nylon, polyurethanes and polyolefins.

11. Sport item, of the kind comprising at least a substantially rigid outer element made of a thermoplastic material, **characterized in that** it is manufactured by the method according to any of the claims 1 to 10.

12. Sport item according to claim 11, wherein said sport item is a ski boot and wherein said substantially rigid outer element is the outer shell of said ski boot.

13. Sport item according to claim 11, wherein said sport article is a safety helmet to be used in sports practice and wherein said substantially rigid outer element is the outer shell of said safety helmet.
